Europäisches Patentamt

European Patent Office

Office européen des brevets

(11) Publication number: **0 546 645 A1**

# EUROPEAN PATENT APPLICATION

(21) Application number: **92203878.1**

(22) Date of filing: **11.12.92**

(51) Int. Cl.5: **H01M 6/52**

(30) Priority: **13.12.91 IT MI913352**

(43) Date of publication of application:
**16.06.93 Bulletin 93/24**

(84) Designated Contracting States:
**DE ES FR GB**

(71) Applicant: **NUOVA SAMIM S.p.A.**
**Via Lodovico Cerva 7**
**I-00143 Rome(IT)**

(72) Inventor: **Cangini,Giuseppe**
**Via Ogaden 15**
**I-00199 Rome(IT)**

Inventor: **Figari,Luigi**
**Via Battolomeo d Alviano 18**
**I-20146 Milan(IT)**
Inventor: **Moglie,Luciano**
**Via Federico Paolini 55**
**I-00122 Rome(IT)**
Inventor: **Pescetelli,Alessandro**
**Piazza Zamagna 42**
**I-00143 Rome(IT)**

(74) Representative: **Roggero, Sergio**
**Ing. Barzanò & Zanardo Milano S.p.A. Via**
**Borgonuovo 10**
**I-20121 Milano (IT)**

(54) **Process for the treatment of exhausted batteries.**

(57) A process for the treatment of any types of exhausted batteries is disclosed, which essentially comprises the following steps:

(a) crushing the exhausted batteries down to a size of less than 7 mm, by operating in a flowing water stream, followed by a step of stirring in water and a sieving, from which an aqueous slurry of a powder fraction (undersize fraction) and a coarse fraction (oversize fraction) are obtained;

(b) stirring the aqueous powder slurry, by operating at a pH value comprised within the range of from 7 to 8, followed by a filtration by means of which the solid matter is separated from the aqueous solution, which is sent to the waste liquors treatment step;

(c) removal of mercury from both the coarse fraction as obtained from (a) and the separated solids as obtained from (b), in a mercury removal furnace, which is a continuous revolving, indirect-heating furnace operating under total air absence conditions, to which calcium hydroxide is added, with practically mercury-free residues being obtained.

Fig.1

The present invention relates to a process for the treatment of exhausted batteries.

The reason why the exhausted batteries are submitted to treatment basically is of environmental character: i.e., said treatment aims at separating, removing and recovering mercury, which is regarded at present as being the most noxious component of batteries, as well as other noxious components, such as Zn, Fe, Mn, Cd, Pb, Ni, Cl-, $NH_4^+$, KOH, Cr and so forth.

Another reason is given by the possibility of recovering some battery components (manganese, iron, zinc, cadmium, nickel, and so forth).

The conventional pyrometallurgic treatment processes essentially consist of the following steps;

-- batteries crushing;

-- thermal treatment in a furnace, at an average temperature of 600-800° C;

-- condensation and separation of mercury developed from the gases inside the furnace;

-- several treatments of furnace residue for the coarse separation of the main components (Fe, Mn, Zn).

Furthermore, still other processes, of hydrometallurgic character are known which comprise, after battery crushing, a dissolution of the crushed material in one or more suitable dissolving agents (nitric acid, hydrochloric acid, sulfuric acid, acetic acid, and so forth), with a first separation of the several components of batteries being obtained, followed by known treatments (such as electrolysis, cementation, precipitation, and so on), in order to obtain a better separation, so as to obtain a commercial product.

In general, one might say that the main drawbacks of said processes are their operating costs, as well as their dangerousness, because, for example, during the thermal treatment in the furnace, mixtures in the gas state of mercury, chlorides, organic substances, ammonia, heavy metals (cadmium, lead, zinc, and so on) are formed, which require a high and accurate process control.

Also in those processes which use dissolving agents, from the chemical attack with strong acids toxicant compounds can be formed, such as hydrogen, acidic mists, and so forth.

Furthermore, these are very complex processes, because although the dissolution carried out by means of a determined acid addresses the problem of a particular component, said dissolution causes however an intimate mixing of the other components to occur (for example, in one single, common solution), such that their subsequent new separation becomes extremely complex.

Another type of process known from the prior art is the one disclosed in patent application DE-247 023.

Said process essentially comprises:

-- an initial, very complex step of grinding, sieving and magnetic separation of the components, from which four streams are obtained:

- a first stream containing magnetic scrap (Fe)
- a second stream, essentially constituted by alkaline batteries, which have not undergone crushing
- a third, non-magnetic stream (paper, plastics, not opened batteries)
- a fourth stream constituted by the powder portion of the urdersize fractions (a fine, black mass).

-- the fourth stream, to which the black mass and the non-magnetic portion coming from the first and second stream are previously added, is washed with water in order to remove alkaline and amminium salts, then is combined with the third stream and is treated in a mercury removal furnace, from which a gas stream emerges which contains mercury and organic compounds, which is then submitted to post-combustion and mercury condensation, and a residue is sent, in its turn, to a WAELZ furnace for Zn, Cd, Pb separation, in which another residue is formed, which is treated with sulphuric acid in order to obtain a residue of manganese dioxide and a manganese sulphate solution;

-- the first stream is deprived of mercury inside a furnace and the residue is ground and mechanically separated again, with a finished iron product being obtained, together with a fine residue which is recycled to the main circulation of fines (fourth stream);

-- the second stream is submitted to grinding steps in suitable mills and to a thermal treatment, with a magnetic portion and a non-magnetic, powder portion being eventually obtained, which are respectively mixed with the first stream and added to the fourth stream.

More in particular, from the flow chart disclosed in DD-247 023, one may observe that the third stream is directly sent to the mercury removal furnace, without any preliminary washing, and that the first stream and the second stream, before being washed, undergo thermal treatments and temperatures higher than 300° C (respectively at maximum temperatures of 700° C and 318°).

All the above leads to the same drawbacks, even if to a slightly smaller extent, which are found in the above cited prior processes, because both during the thermal treatments, and, in particular, in the mercury removal furnace, the noxious gas combinations of mercury, chlorides, organic substances, heavy metals, ammonia, and so on, are formed.

The present Applicant disclosed in Italian patent application IT-22 146 A/89 to their name, a process which overcomes most drawbacks which affected the prior processes, and displays the following substantial advantages:

-- a high environmental hygiene, because the process is carried out with room temperature water, and in the mercury removal furnace, the process is carried out at temperatures, which on an average, are lower, and practically in the absence of chlorides, ammonium, potassium hydroxide, and the like, with, in such a way, the formation of any noxious and/or umpredictable compounds being avoided;

-- a practically absolutely complete mercury removal from residues, down to an end level of 1:2 g of Hg per ton;

-- low operating costs and high running safety.

The process of the above cited Italian patent application essentially comprises the following steps:

(a) crushing the exhausted batteries, followed by a step of stirring in water and a sieving, from which an aqueous slurry of a powder fraction (undersize fraction) and a coarse fraction (oversize fraction) are obtained;

(b) stirring the aqueous powder slurry, at a pH value higher than 7, followed by a filtration by means of which solid matter is separated from the aqueous solution, which is sent to a waste liquors treatment step;

(c) removal of mercury from both the coarse fraction as obtained from (a) and the separated solids as obtained from (b), in a mercury removal furnace, with practically mercury-free residues being obtained.

We have improved said process, above all by means of the use of a particular furnace type; the resulting novel process, besides the advantages already obtained in the previous process, makes it possible the risk of development of ammonia fumes being completely avoided, while chlorine amounts and sulfur amounts being simultaneously removed, which are equivalent to 70% and 60%, respectively, of the respective amounts entering the furnace together with the batch sent to the treatment.

The process according to the present invention for treating exhausted batteries of any types, essentially comprises the following steps:

(a) crushing the exhausted batteries, followed by a step of stirring in water, carried out for a time period which is preferably longer than 20 minutes, and a sieving, from which an aqueous slurry of a powder fraction (undersize fraction) and a coarse fraction (oversize fraction) are obtained;

(b) stirring the resulting aqueous powder slurry, at a pH value comprised within the range of from 7 to 8, followed by a filtration by means of which solid matter is separated from the aqueous solution, which is sent to a waste liquors treatment step;

(c) removal of mercury from both the coarse fraction as obtained from (a) and the separated solids as obtained from (b), in a mercury removal furnace, with practically mercury-free residues being obtained, is characterized in that the crushing of said exhausted batteries is carried out in a water stream, until a smaller size than 7 mm is reached, and that the mercury removal furnace is a continuous, revolving, indirect-heating furnace, operating in the total absence af air, to which furnace calcium hydroxide is added.

The crushing unit should be capable of accepting exhausted batteries of any sizes and types of electrochemical system.

By making it possible completely opened crushed pieces (i.e., not squeezed or closed around themselves), the crushing operation, when carried out as disclosed hereinabove, favours the subsequent release of the paste contained inside the batteries, and the complete dissolving of the salts.

Furthermore, because such a crushing takes place in a flowing water stream, the cooling of the shortcircuited batteries and a preliminary dissolution of salts are accomplished.

By operating in that way, the development of fumes ( in particular of ammonia) are successfully avoided.

In the operation as per the above (b) step, i.e., slurry stirring and subsequent filtration, the complete solubilization of present salts is accomplished, together with the simultaneous separation of the paste contained inside the batteries from the coarse metal parts. The total solubilization of salts (prevailingly sodium and aluminum chlorides) secures the continuous running, under optimum conditions, of the subsequent thermal treatments (with furnace fouling and furnace corrosion due to the presence of salts being prevented).

Furthermore, the salts contained inside the batteries can be recovered free from toxic and noxious pollutants, with said salts being obtained at an industrial purity level.

The mercury removal furnace operates at a temperature which preferably is lower than 700° C, and more preferably is comprised within the range of from 500 to 630° C.

During such a mercury removal treatment, to the furnace calcium hydroxide is added, as briefly mentioned above, preferably in amounts comprised within the range of from 10 to 500 kg/hour, in order to fix chlorine and sulfur present in the gas phase, removing them from the process gas stream sent to the purification step.

A disclosure in greater detail of the mercury removal furnace which we suggest to use is given now.

The recommended mercury removal furnace is constituted by a horizontal cylindrical drum revolving around its own longitudinal axis.

The solid material, constituted by crushed batteries, is fed to an end of said furnace and, after travelling throughout the drum length, it leaves the furnace from the opposite end.

The advancing and continuous mixing of the material inside the interior of the furnace is secured both by the revolutionary motion of the said furnace, and by the presence of suitable baffles welded inside the interior of furnace shell.

In order to secure furnace safety, it is recommended that:

-- both the ends of the same furnace are provided with sealing devices of mechanical type, which totally prevent air from entering the interior of the same furnace, with nitrogen being moreover flown through said sealing devices, so that, should a wear of said sealing devices occur, into the interior of the furnace nitrogen (i.e., an inert gas from combustion view point) enters instead of air;

-- the solid material charging and discharging devices prevent air seepage;

-- through the inner chamber defined by the furnace shell, a stream of an inert gas completely free from oxygen (for example, nitrogen and carbon dioxide) is flown continuously, in order to remove any combustible or toxic vapours released by the material which is been treated.

The heating of the furnace can take place from the outside means of methane fed burners, as a function of the temperature of the same shell wall.

The unit constituted by the revolving furnace and the external heating burners should preferably be installed inside the interior of a refractory chamber which keeps to a minimum heat dispersion towards the external environment.

The residues from mercury removal furnace can constitute a raw material for industry of manganese and iron alloys, or can be sent to metallurgical facilities of WAELZ or Imperial Smelting types for the recovery of zinc, lead and cadmium and the scorification or recovery of manganese and iron, or they can be submitted to the romoval of their magnetic portion, followed by a chemical attack with hydrometallurgical separation (electrolysis, cementation, and so forth) of iron-deprived residue, aiming at the main Zn-Mn separation.

A further alternative consists in submitting said residues to a sieving from which a fine cut (mostly constituted by $MnO_x$) and a coarse cut are obtained, on which coarse cut a separation is carried out, with iron and zinc scraps being obtained subdivided from each other.

The stirring of the powder slurry is preferably carried out for a longer time than 20 minutes.

In the aqueous solutions obtained by filtering the aqueous powder slurry, before being sent to the liquors treatment step, all ammoniacal compounds are kept in solution.

As regards the coarse fraction (oversize fraction) from the above (a) step, said coarse fraction can possibly be submitted to a separation step (before being submitted to the mercury removal step), in order to separate plastics components from other metal and non-metal components; the plastic scraps are then washed and the powder residues are recovered, which are added, together with the wash liquors, to the aqueous powder slurry from the above (a) step, whilst the metal and non-metal components are sent to the mercury removal furnace as per the above (c) step.

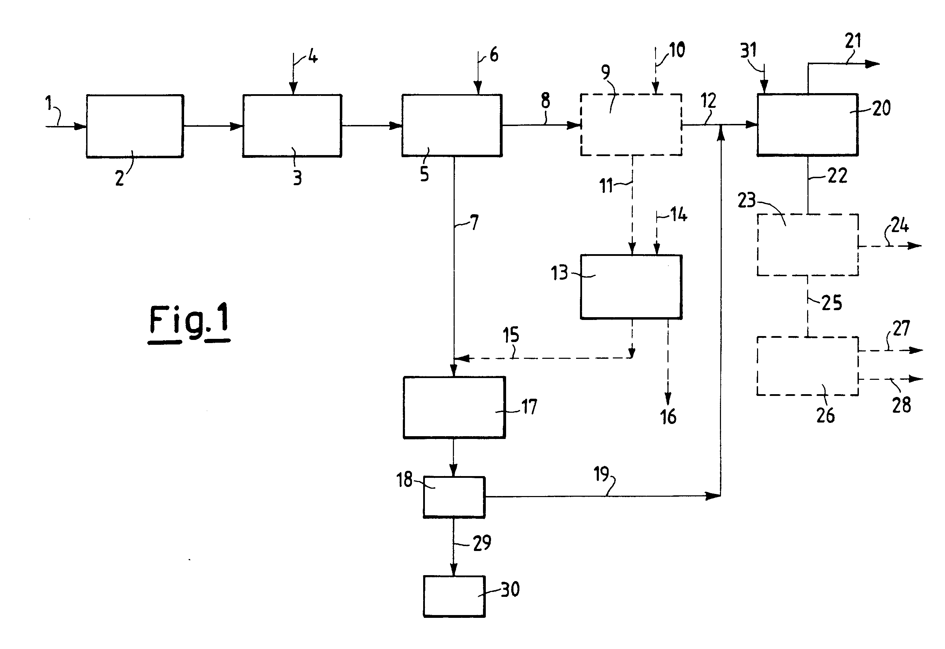

The invention is better disclosed now, by referring to the flow diagram of the accompanying Figure 1, which depicts an embodiment thereof, but which shall not be regarded as being in any way limitative of the same invention (the non-mandatory steps, i.e., the preferred or possible steps, are shown in the flow diagram in dashed lines).

The treatment batch (1) constituted by dry batteries of any types (alkaline, acidic, nickel-cadmium, mercury batteries, and so forth), is first crushed in a blade mill (2), then is washed in a wash-out drum (3) with water (4) (with all chlorides being dissolved, and all insoluble zinc, manganese and other heavy metal salts being caused to precipitate, with the as important separation and cleaning of the ground pieces being furthermore favoured and the subsequent separation of plastic materials from metal parts sticking to them being made easier), the crushed materials are then sieved in a rotary sieve (5) of shaking type, with meshes of from 2 to 4 mm, kept under water rain (6), by means of which two streams are obtained, i.e., an aqueous slurry containing the powder fractions (7) and a coarse fraction (8), consisting of pieces having smaller average size that 7.5 cm.

The coarse cut (8) can possibly be submitted to a separation in a hydro-gravimetric machine (9), to which also water is fed (10) in order to separate the floating plastic materials (11) from the metal and non-metal heavy components (12).

The plastic materials (11) are submitted to a washing (13) with a slightly acidic aqueous solution containing 1-2 ppm of an industrial surfactant; then, they are rinsed with water (14) on a sieve, so as to wash-out the powder residues, possibly still sticking, which (15) are recycled to the slurry (7), together with wash liquors.

The stream (16) represents the washed plastic materials, which can be sent to the disposal.

The slurry (7) is submitted to stirring inside a vat (17) at pH 7-8, with some ppm (of NaHS) being added, and is then filtered (18) in order to separate the solid matter (containing mercury) (19), which is combined with stream (12); the filter cake is washed with water.

The combined streams (12) and (19) are sent to a mercury removal furnace (20) to which also calcium hydroxide (31) is added, and from which mercury emerges in gas form (21) (to be condensed).

The residue (22) from the indirect-heating mercury removal furnace is possibly sieved on a shaked sieve (23), which subdivides it into a powder portion (24) and a coarse portion (25), which is possibly sent to a magnetic separation (26), in which iron scrap (27) and Zn, brass and graphite scraps (28) are separated.

The aqueous solution (29) which leaves the filtration (18) is sent to a liquors treatment step (30).

An example carried out by means of a system corresponding to the flow diagram of Figure 1, but without the steps shown in said Figure in dashed lines, is suppplied now.

Example

-- Charge (1): 1000 kg of alkaline, acidic, nickel-cadmium, mercury, and so forth, batteries.
-- Wash water (4): 8000 litres
-- Coarse fraction (8): 379 kg, subdivided as follows:
220 kg of Fe (0.0175% of Hg)
36 kg of plastic materials (0.013% of Hg)
75 kg of Zn (0,0415% of Hg)
35 kg of graphite (0,0415% of Hg)
10 kg of brass
3 kg of paper (0,015% of Hg) (Cl- is practically absent)
-- Powder slurry (7):
contains:
    -- water (containing dissolved Cl- , $NH_4 +$ , $K^+$)
    -- MnO, $MnO_2$, $MnO_3$ (solids)
    -- ZnO (solid)
    -- carbon black, graphite powder (solids)
    -- zinc dust (solid)
    -- paper fibres
-- Solid matter (19): 460 kg of dry solid residue, subdivided as follows (values as weight-%):

| | |
|---|---|
| Zn | 22% |
| Mn | 37% |
| Cd | 0.0065% |
| Hg | 0.26% |
| carbon black | 8.8% |
| Cl- | 0.06% |

-- Aqueous solution (29): 7940 litres (pH 8.9) containing:

| | |
|---|---|
| Hg | 100 mg/l |
| Zn | 600 mg/l |
| Cd | 6 mg/l |
| K | 15,000 mg/l |
| $Cl^-$ | 24,000 mg/l |
| $NH_4^+$ | 6,300 mg/l |

As regards paper, it can be pointed out that a portion thereof is pulped during the several washing steps, a portion thereof remains sticking to the sieves from which it is scraped off by means of brushes, which reduce it into fibre form, so that it is actually comprised within the solid matters (19).

-- Average temperature of mercury removal furnace: 480° C

-- added calcium hydroxide: 100 kg/hour

-- residue (22) from mercury removal furnace: Hg = 0.00014% (1.4 g/t).

## Claims

1. Process for the treatment of any types of exhausted batteries, essentially comprising the following steps:

   (a) crushing the exhausted batteries, followed by a step of stirring in water and a sieving, from which an aqueous slurry of a powder fraction (undersize fraction) and a coarse fraction (oversize fraction) are obtained;

   (b) stirring of the aqueous powder slurry, at a pH value comprised within the range of from 7 to 8, followed by a filtration by means of which solid matter is separated from the aqueous solution, which is sent to a waste liquors treatment step;

   (c) removal of mercury from both the coarse fraction as obtained from (a) and the separated solids as obtained from (b), in a mercury removal furnace, with practically mercury-free residues being obtained,

   characterized in that crushing said exhausted batteries is carried out in a water stream, until a smaller size than 7 mm is reached, and that the mercury removal furnace is a continuous, revolving, indirect-heating furnace, operating in the total absence af air, to which furnace calcium hydroxide is added.

2. Process according to claim 1, in which the mercury removal furnace operates at a lower temperature than 700° C.

3. Process according to claim 2, in which the mercury removal furnace operates at a temperature comprised within the range of from 500 to 630° C.

4. Process according to claim 1, in which the residues from the mercury removal furnace are submitted to a sieving, from which a fine fraction and a coarse fraction are obtained, which coarse fraction is subsequently submitted to a separation step, from which iron scrap and zinc scrap are obtained separated from each other.

5. Process according to claim 1, in which the crushed batteries are stirred in water for a longer time period that 20 minutes.

6. Process according to claim 1, in which the stirring of the aqueous powder slurry is carried out for a longer time period than 20 minutes.

7. Process according to claim 1, in which the coarse fraction (oversize fraction) as obtained from (a) above is submitted to separation, with the separation being obtained of plastics from other metal and non-metal components, with the plastics being then washed, with the powder residues being recovered, which are added, together with the wash liquors, to the aqueous powder slurry as obtained from (a) above, and the metal and non-metal components being sent to the mercury removal furnace according to as of (c) above.

8. Process according to claim 1, in which the amount of calcium hydroxide inside the mercury removal furnace is comprised within the range of from 10 to 500 kg/hour.

9. Process according to claim 1, in which through the mercury removal furnace, an inert gas is flown.

10. Process according to claim 1, in which the mercury removal furnace is provided, at both of its ends, with sealing devices of mechanical type.

Fig.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP - A - 0 425 045 (NUOVA SAMIM) * Claims * | 1-7,9, 10 | H 01 M 6/52 |
| A | EP - A - 0 284 135 (METALLGESELLSCHAFT) * Claims 1,9 * | 1 | |
| A | CH - A - 670 015 (LECLANCHE) * Claims * | 1 | |

TECHNICAL FIELDS SEARCHED (Int. Cl.5)

H 01 M

The present search report has been drawn up for all claims

| Place of search | Date of completion of the search | Examiner |
|---|---|---|
| VIENNA | 19-03-1993 | LUX |